# EUROPEAN PATENT APPLICATION

(11) **EP 3 370 192 A1**
(43) Date of publication of application: **05.09.2018**
(21) Application number: 15907334.5
(22) Date of filing: 30.10.2015
(51) Int. Cl.: G06Q 10/06, G06Q 10/10

(54) **INFORMATION PROCESSING DEVICE, INFORMATION PROCESSING PROGRAM, AND INFORMATION PROCESSING METHOD**

(71) Applicant: Fujitsu Limited, Kawasaki-shi, Kanagawa 211-8588 (JP)
(72) Inventor: TAIRA, Kei, Kawasaki-shi Kanagawa 211-8588 (JP); SUMIOKA, Motoshi, Kawasaki-shi Kanagawa 211-8588 (JP); NODA, Masahide, Kawasaki-shi Kanagawa 211-8588 (JP); OHNO, Takashi, Kawasaki-shi Kanagawa 211-8588 (JP)
(74) Representative: Haseltine Lake LLP
(86) International application number: PCT/JP2015/080833
(87) International publication number: WO 2017/072971

(57) **Abstract**

A server (1) estimates, based on task information (21) that defines respective schedules of a plurality of tasks, a shift possibility of the respective schedules of the tasks. The server (1) sets information indicating to be opened to be public for a task, the estimated shift possibility of which is lower than a reference value out of the tasks, in a schedule DB (22) that stores the schedules of the tasks, and therefore can perform public setting of schedules automatically.

## Description

### [Technical Field]

The present invention relates to an information processing apparatus and the like.

### [Background Art]

As an electronic tool to record a schedule of a person, a schedule management tool of an electronic appointment book that is installed in a personal mobile terminal device or in a common terminal device accessible to multiple people has been available. In the electronic appointment book, a scheduled start time and a scheduled end time of an action (referred to as "task") to be taken by a user of the electronic appointment book are recorded. The user of the electronic appointment book can manage his/her schedule by having the task displayed, for example, on a display of a mobile terminal device to check it.

In the conventional schedule management, there has been purposes of managing a user's own schedule, and of sharing a schedule between the user himself/herself and another person. For the purpose of sharing a schedule between the user himself/herself and another person, schedules of himself/herself and the other person are both open to each other. For example, a technique of a scheduling support system of creating a work plan of a user by allocating work time in a work plan of the user for tasks requiring scheduling on a To-Do task list, and of displaying the work plan of the user on a display unit has been known (for example, refer to Patent Document 1). In this technique, when displaying the work plan of a user, the scheduling support system displays the work plan of the user based on information indicating open/closed of a task set by the user.

### [Citation List]

### [Patent Citation]

### Patent Document

Patent Document 1: Japanese Laid-open Patent Publication No. 2006-146530
Patent Document 2: Japanese Laid-open Patent Publication No. 2002-259650
Patent Document 3: Japanese Laid-open Patent Publication No. 2013-73252

### [Summary of Invention]

### [Technical Problem]

However, there has been a problem in the conventional schedule management that public setting of a schedule is not done automatically. For example, in the scheduling support system, a schedule of a user is displayed based on the information indicating open/closed of a task that has been set by the user, but the information indicating open/closed of a task is not set automatically.

In one aspect, it is an object to provide automatic public setting of a schedule.

### [Solution to Problem]

An information processing apparatus disclosed in the present application includes: an estimating unit that estimates, based on task information that defines respective schedules of a plurality of tasks, a shift possibility of the respective schedules of the tasks; and a setting unit that sets information indicating to be opened to be public for a task, the shift possibility estimated by the estimating unit of which is lower than a reference value out of the tasks, in a storage unit that stores the schedules of the tasks.

### [Advantageous Effects of Invention]

According to one mode, automatic public setting can be achieved.

### [Brief Description of Drawings]

FIG. 1 is a configuration diagram of a system including a server according to an embodiment.
FIG. 2 is a functional block diagram illustrating a configuration of the server according to the embodiment.
FIG. 3 illustrates one example of contents of task information according to the embodiment.
FIG. 4 illustrates one example of a data structure of a schedule DB according to the embodiment.
FIG. 5 illustrates one example of schedule-shift possibility estimation according to the embodiment.
FIG. 6 illustrates a flowchart of schedule-shift-possibility estimation processing according to the embodiment.
FIG. 7 illustrates a flowchart of schedule opening processing according to the embodiment.
FIG. 8A illustrates a specific example of schedule opening according to the embodiment.
FIG. 8B illustrates a specific example of schedule opening according to the embodiment.
FIG. 8C illustrates a specific example of schedule opening according to the embodiment.
FIG. 9 illustrates another configuration of the system according to the embodiment.
FIG. 10 illustrates one example of a computer that executes an information processing program.

### [Embodiments for Carrying Out the Invention]

An embodiment of an information processing apparatus, an information processing program, and an information processing method disclosed in the present application is explained in detail below based on the drawings. The embodiment is not intended to limit the present invention.

Moreover, meaning of terms used in the present application is explained. "Task" is used as a term that may include all sorts of actions taken by a person. One example of "task" can be a business operation, but not limited thereto. Actions, such as a private trip and a private dinner, can also be included. Furthermore, "task" can include an interval between actions, an act of moving to a specific place to do a next action. "Task information" signifies information defining details of a task. "Task information" includes specific work details, an executer of a task, the number of executers, time used to execute a task, an execution deadline, a task execution place, a tool to be used to execute a task, and the like. Note that "task information" includes one that defines a scheduled start time and a schedule end time, and one that does not. An example of contents of "task information" is described later. "Scheduling" signifies to set at least one of a scheduled start time and a scheduled end time of a task for which the scheduled start time and the scheduled end time have not been set, or to change and reset a schedule start time and a scheduled end time of a task for which at least one of the scheduled start time and the scheduled end time has been set. "Schedule" signifies information that indicates a result of "scheduling". "Schedule" that is expressed in a human-recognizable form, such as visually, aurally, or alfactorily, is called "time table". "Schedule" includes "private schedule" and "public schedule". "Private schedule" signifies a schedule of a task of an individual. "Public schedule" signifies a schedule of a task another person different from the individual. Moreover, "arbitration" signifies to perform scheduling, identifying the execution order of plural tasks. Embodiment

### [Configuration of Scheduling Support System]

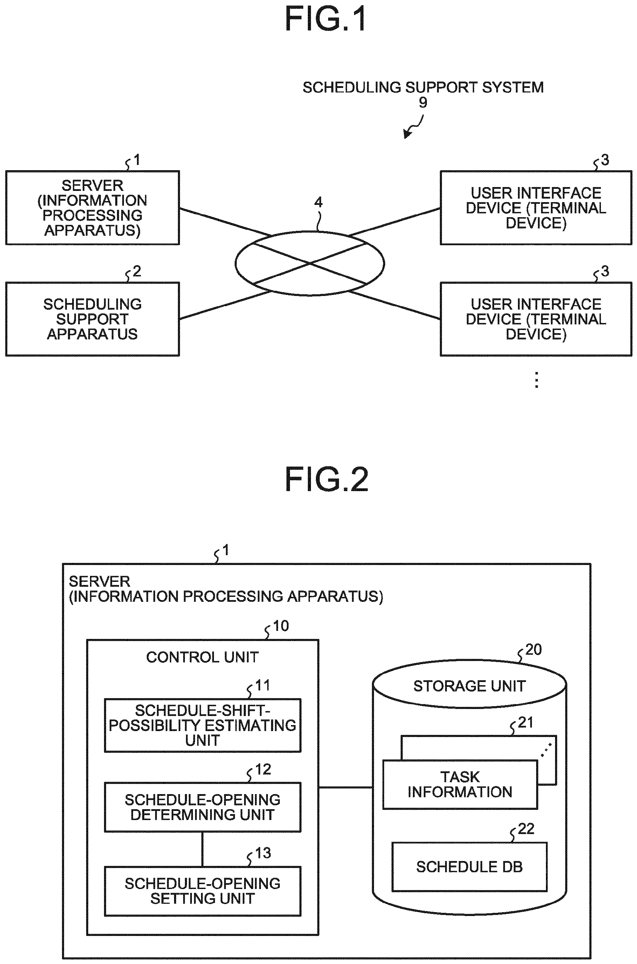

FIG. 1 is a configuration diagram of a system including a server according to an embodiment. A scheduling support system 9 includes a server 1, a scheduling support apparatus 2, and a user interface device 3. The server 1 is connected to each of the scheduling support apparatus 2 and the user interface device 3 through a network 4. The server 1 corresponds to an information processing apparatus as one example.

The user interface device 3 is an electronic device that can be used by a user executing a task. The user interface device 3 can display details of a task that is executed by the user personally, and a schedule of the user's personal task. Furthermore, the user interface device 3 can display a schedule of another person different from the user. The user interface device 3 corresponds to a mobile terminal device represented by smartphones but is not limited thereto. The user interface device 3 can be a laptop or a desktop personal computer, a PDA (personal digital assistant), or the like.

The scheduling support apparatus 2 creates a schedule for plural tasks by performing arbitration of the tasks, using execution order (task flow) of the respective tasks that have been defined in plural pieces of task information, and the task information of the respective tasks. Subsequently, the scheduling support apparatus 2 stores the schedule for the plural tasks in a schedule DB (database). The scheduling support apparatus 2 transmits the plural pieces of task information and contents of the schedule DB to the server 1, for example, at the creation of the schedule for the plural tasks. Furthermore, the scheduling support apparatus 2 displays, for example, when receiving a display request from a user, a personal schedule of the user for which the display request has been made on the user interface device 3 of the user.

The server 1 estimates a task-shift possibility based on various kinds of parameters used for scheduling of a task, and opens a schedule of a task with a low shift possibility. That is, when the shift possibility of a task is low, the server 1 displays a schedule of this task on a public schedule to open the schedule of this task to other people. On the other hand, when the shift possibility of a task is high, the server 1 displays a schedule of this task on a personal schedule, but does not display it on the public schedule, to leave it as a spare time without opening the schedule of this task to other people. The task having a low shift possibility is, for example, a task, the execution deadline of which is approaching, or a task that is executed by multiple people. The task with a high shift possibility is, for example, a task, the execution deadline of which is in the distant future and that is executed by only a single person. Explanation of the shift possibility is given later.

### [Configuration of Server]

A configuration of the server 1 included in the scheduling support system 9 is explained referring to FIG. 2. FIG. 2 is a functional block diagram illustrating a configuration of the server according to the embodiment. As illustrated in FIG. 2, the server 1 includes a control unit 10 and a storage unit 20.

The control unit 10 has an internal memory to store a program and control data in which various processing procedures are defined, and performs various kinds of processing by using these. The control unit 10 corresponds to an electronic circuit of an integrated circuit, such as an ASIC (application-specific integrated circuit) and an FPGA (field-programmable gate array). Alternatively, the control unit 10 corresponds to an electronic circuit such as a CPU (central processing unit) and an MPU (micro processing unit). Furthermore, the control unit 10 includes a schedule-shift-possibility estimating unit 11, a schedule-opening determining unit 12, and a schedule-opening setting unit 13. The schedule-shift-possibility estimating unit 11 is one example of an estimating unit. The schedule-opening determining unit 12 and the schedule-opening setting unit 13 are one example of a setting unit.

The storage unit 20 corresponds to a storage device of, for example, a non-volatile semiconductor memory device, such as a flash memory and an FRAM (registered trademark) (ferroelectric random access memory), and the like. Moreover, the storage unit 20 has task information 21 and schedule DB 22. The schedule DB 22 is information of schedule that indicates result of scheduling. The task information 21 and the schedule DB 22 are transmitted, for example, at the creation of the schedule by the scheduling support apparatus 2, and is stored in the storage unit 20.

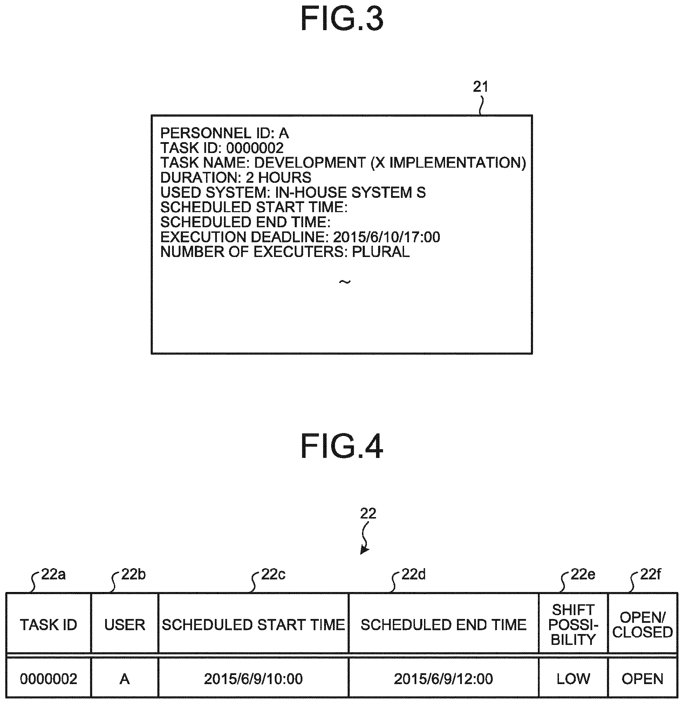

Contents of the task information 21 are explained referring to FIG. 3. FIG. 3 illustrates one example of contents of task information according to the embodiment. As illustrated in FIG. 3, the task information 21 defines "PERSONNEL ID", "TASK ID", "TASK NAME ", "DURATION", "USED SYSTEM ", "SCHEDULED START TIME", "SCHEDULED END TIME", "EXECUTION DEADLINE", and "NUMBER OF EXECUTERS". "PERSONNEL ID" is information of an item to identify a person that executes a task, and in this example, "A" is set as a value of the item. "TASK ID" is information of an item that is assigned to each task uniquely, and in this example, "0000002" is set as a value of the item. "TASK NAME" is preferable to express details of a task simply to be easy for an executer of the task to understand the task. In this example, "development (X implementation)" indicating development of implementing X is set as a value of the item. "DURATION" indicates estimated time to be used for executing a task. For "DURATION", duration can be determined by using average time used for execution of the task from past results. In this example, the value of "DURATION" is set to "2 hours". "USED SYSTEM" indicates a system that is used to execute a task. In this example, "in-house system S" is set as a value of the item. "SCHEDULED START TIME" indicates a scheduled time at which a task is started to be executed, and "SCHEDULED END TIME" indicates a scheduled time at which execution of the task is ended. In this example, values of both the items are not set. "EXECUTION DEADLINE" indicates an execution deadline of a task. In this example, "2015/6/10/17:00" is set as a value of the item. "NUMBER OF EXECUTERS" indicates the number of executers of a task. To "NUMBER OF EXECUTERS", for example, "plural" is set when executed by multiple people not only by a person in charge, and "singular" is set when executed only by a person in charge. In this example, "plural" is set as a value of the item. "NUMBER OF EXECUTERS" is not limited to "plural" and "singular", but can define the actual number of people that execute it.

The task information 21 is not limited to the contents illustrated in FIG. 3, but can have contents according to each task. For example, the task information 21 can define "REFERENCE DOCUMENT" that indicates a document to be referred to for executing a task, or "USED SOFTWARE" that indicates software or application used for executing a task. Respective contents defined in the task information 21 are parameters of various kinds.

A data structure of the schedule DB 22 is explained referring to FIG. 4. FIG. 4 illustrates one example of a data structure of the schedule DB according to the embodiment. As illustrated in FIG. 4, the schedule DB 22 stores a user 22b, a scheduled start time 22c, a scheduled end time 22d, a shift possibility 22e, and an open/closed 22f, associating with a task ID 22a. The task ID (identifier) 22a indicates an identifier uniquely expressing a task. The user 22b indicates a user that executes the task. The scheduled start time 22c indicates a scheduled time at which execution of the task indicated by the task ID 22a is started. The scheduled end time 22d indicates a scheduled time at which the execution of the task indicated by the task ID 22a is ended. The shift possibility 22e indicates a possibility that the scheduled task is shifted. The shift possibility 22e can be classified into, for example, three levels. When the shift possibility 22e is classified into three levels, as an example, it is set to "low" when the shift possibility is low, "high" when the shift possibility is high, and "moderate" when the shift possibility is neither low nor high. The open/closed 22f is information that indicates whether to open a schedule of a task indicated by the task ID 22a to the public schedule. To the open/closed 22f, as an example, "open" that indicates to open it and "closed" that indicates not to open are set. Although the shift possibility 22e has been explained to be classified into three levels, it is not limited thereto, and it can be classified into levels larger than three levels. Moreover, the levels of the shift possibility 22e are not limited to be determined by "low", "moderate", and "high", but can also be determined by points. Details of the shift possibility are described later.

As an example, when the task ID 22a is "0000002", "A" as the user 22b, "2015/6/9/10:00" as the scheduled start time 22c, "2015/6/9/12:00" as the scheduled end time 22d are recorded. "Low" as the shift possibility 22e, and "open" as the open/closed 22f are recorded.

Referring back to FIG. 2, the schedule-shift-possibility estimating unit 11 estimates the shift possibility of respective schedules of plural tasks based on the task information 21 that defines the plural tasks. For example, when receiving the task information 21 and the schedule DB 22 that are transmitted from the scheduling support apparatus 2, the schedule-shift-possibility estimating unit 11 adds contents of the task information 21 and the schedule DB 22 to the storage unit 20. Addition is not only addition of new information, but also includes update and deletion of existing information. The schedule-shift-possibility estimating unit 11 estimates the shift possibility of respective schedules of the plural tasks based on various kinds of parameters included in the task information 21, for the respective tasks corresponding to the contents of the added task information 21 and the schedule DB 22. As an example, it is assumed that the various kinds of parameters are an execution deadline and the number of executers. The schedule-shift-possibility estimating unit 11 estimates the shift possibility of the respective schedules of the plural tasks based on the execution deadline and the number of the executers included in the task information 21, for the respective tasks. For a task for which a shift possibility of a schedule has been estimated, the schedule-shift-possibility estimating unit 11 stores the shift possibility of in the shift possibility 22e of the schedule DB 22.

There is a case in which the execution deadline is not registered in the task information 21 that defines a specific task. In this case, the schedule-shift-possibility estimating unit 11 refers to the schedule DB 22 and estimates a shift possibility of a schedule of a task that follows the specific task, prior thereto. As the schedule of the following task can be fixed when the shift possibility of the schedule of the following task is low, the schedule-shift-possibility estimating unit 11 sets the execution deadline of the specific task to the scheduled start time 22c of the following task. When the shift possibility of the schedule of the following task is high, it is not possible for the schedule-shift-possibility estimating unit 11 to fix the schedule of the following task. Therefore, as an example, the schedule-shift-possibility estimating unit 11 sets the execution deadline of the specific task to a scheduled time that is a time when the duration set in the task information 21 that defines the specific task has passed since the scheduled start time of the specific task.

Although the schedule-shift-possibility estimating unit 11 calculates a shift possibility of respective schedules of plural tasks when generating schedules of the tasks, but it is not limited thereto. The schedule-shift-possibility estimating unit 11 can recalculate the shift possibility of a schedule of a task relating to task information or a task flow to which a change has been made when the change occurs in the task information or the task flow.

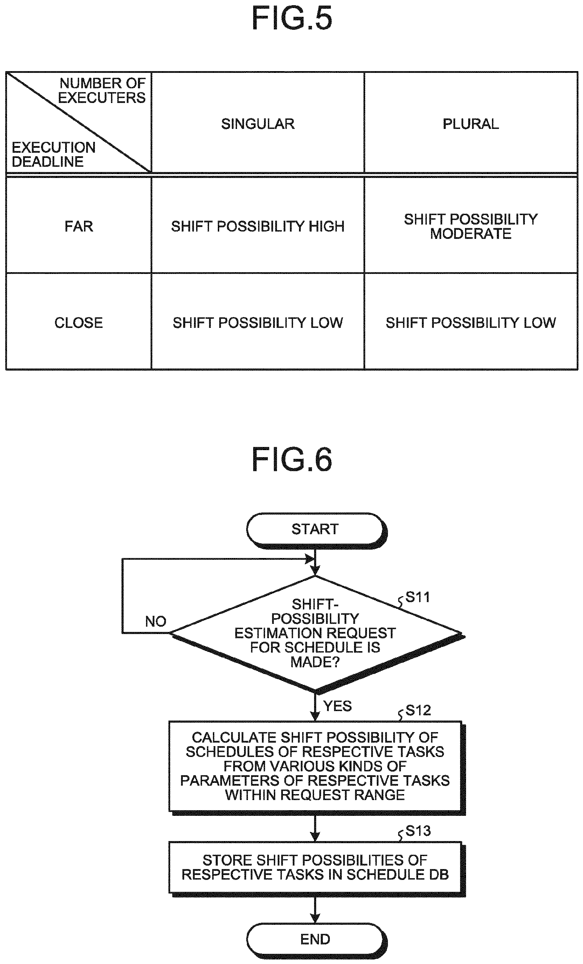

An example of estimation of a schedule shift possibility that is performed by the schedule-shift-possibility estimating unit 11 is explained referring to FIG. 5. FIG. 5 illustrates one example of schedule-shift possibility estimation according to the embodiment. A table illustrated in FIG. 5 indicates a shift possibility of a task associating with various kinds of parameters. In this example, a shift possibility corresponding to respective values of the number of executers and the execution deadline is indicated when the parameters used for the estimation of a shift possibility are the number of executers and the execution deadline. Specifically, when the execution deadline is far, and the number of executers is singular, a shift possibility is "high" indicating a high possibility. This is because when the execution deadline is far, and the number of executers is singular, it is estimated that the schedule of this task can be shifted, and another task can be scheduled in place of it. When the execution deadline is close, a shift possibility is "low" indicating a low possibility in either case of the number of executers being singular or plural. This is because it is estimated that the deadline might not be made if the schedule of this task is shifted. When the execution deadline is far, and the number of executers is plural, a shift possibility is "moderate" indicating a moderate possibility. This is because when the execution deadline is far, and the number of executers is plural, an influence caused by shifting the schedule of this task might not be denied even if the execution deadline is far, because there are plural executers that execute the task.

Referring back to FIG. 2, the schedule-opening determining unit 12 determines whether to open the schedule of a task for which the shift possibility of the schedule has been estimated, based on the shift possibility of the schedule. For example, the schedule-opening determining unit 12 determines, for a task for which the shift possibility of the schedule has been estimated by the schedule-shift-possibility estimating unit 11, whether the shift possibility of the schedule is lower than a threshold. The threshold herein is a threshold to determine whether to open a schedule of a task to the public schedule or not. As an example, the threshold is a value corresponding to "moderate". It is determined to open when the shift possibility of the schedule is equal to or lower than "moderate", and it is determined not to open when the shift possibility of the schedule is higher than "moderate". That is, it is determined to open when a shift possibility of a schedule is "moderate" or "low", and it is determined not to open when a shift possibility of a schedule is "high". The threshold can be varied per executer that executes a task. Moreover, the threshold can be varied according to activation of the schedule-opening determining unit 12.

The schedule-opening setting unit 13 registers information indicating that a schedule is to be open for a task, the schedule of which has been determined to be open based on the shift possibility of the schedule in the schedule DB 22. For example, the schedule-opening setting unit 13 stores "open" indicating to open a schedule in the open/closed 22f of the schedule DB 22 when the shift possibility is determined to be lower than a threshold for a task for which the shift possibility of the schedule has been estimated. The schedule-opening setting unit 13 stores "closed" indicating not to open a schedule in the open/closed 22f of the schedule DB 22 when the shift possibility is determined to be higher than the threshold for a task for which the shift possibility of the schedule has been estimated.

### [Flowchart of Schedule-Shift-Possibility Estimation Processing]

Next, a processing procedure of schedule-shift-possibility estimation processing according to the embodiment is explained referring to FIG. 6. FIG. 6 illustrates a flowchart of the schedule-shift-possibility estimation processing according to the embodiment. It is assumed that contents of the task information 21 and contents of the schedule DB 22 transmitted from the scheduling support apparatus 2 are added to the storage unit 20.

As illustrated in FIG. 6, the schedule-shift-possibility estimating unit 11 determines whether a shift-possibility estimation request for a schedule is made by the scheduling support apparatus 2 (step S11). When determining that a shift-possibility estimation request is not made (step S11: NO), the schedule-shift-possibility estimating unit 11 repeats the determination processing until a shift-possibility estimation request is made.

On the other hand, when determining that a shift-possibility estimation request is made (step S11: YES), the schedule-shift-possibility estimating unit 11 calculates a shift possibility of a schedule of each task from various kinds of parameters of each task within a range of the request (step S12). For example, the schedule-shift-possibility estimating unit 11 calculates a shift possibility of respective schedules of plural tasks based on various kinds of parameters included in the task information 21, for the respective tasks corresponding to the added contents of the task information 21 and the schedule DB 22.

The schedule-shift-possibility estimating unit 11 then stores the shift possibilities of the respective tasks in the schedule DB 22 (step S13). For example, the schedule-shift-possibility estimating unit 11 stores a shift possibility of a task for which the shift possibility of the schedule has been estimated in the shift possibility 22e of the schedule DB 22. The schedule-shift-possibility estimating unit 11 then ends the schedule-shift-possibility estimation processing.

### [Flowchart of Schedule Opening Processing]

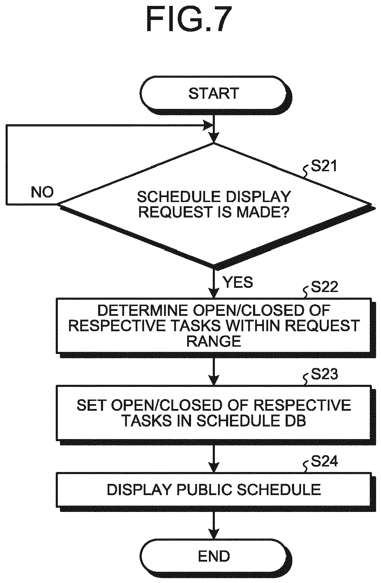

Next, a processing procedure of schedule opening processing according to the embodiment is explained referring to FIG. 7. FIG. 7 illustrates a flowchart of the schedule opening processing according to the embodiment. It is assumed that a display request for a schedule of B on yyyy/mm/dd is made from the user interface device 3 of A.

As illustrated in FIG. 7, the schedule-opening determining unit 12 determines whether a display request for a schedule is made (step S21). When determining that no display request for a schedule is made (step S21: NO), the schedule-opening determining unit 12 repeats the determination processing until a display request for a schedule is made.

On the other hand, when determining that a display request for a schedule is made (step S21: YES), the schedule-opening determining unit 12 determines whether open/closed of respective tasks within the request range (step S22). As an example, the schedule-opening determining unit 12 acquires "B" as the user 22b, "yyyy/mm/dd" as the scheduled start time 22c, which are records corresponding to the task ID 22a, from the schedule DB 22. The schedule-opening determining unit 12 sequentially selects the acquired records. The schedule-opening determining unit 12 determines whether the shift possibility 22e of the selected record is equal to or lower than a threshold. When equal to or lower than the threshold, the schedule-opening determining unit 12 determines the task corresponding to the selected record as "open". When larger than the threshold, the schedule-opening determining unit 12 determines the task corresponding to the selected record as "closed".

Subsequently, the schedule-opening setting unit 13 registers open/closed of each task in the schedule (step S23). For example, the schedule-opening setting unit 13 registers "open" to the open/closed 22f of a record that corresponds to a task determined as "open". The schedule-opening setting unit 13 registers "closed" to the open/closed 22f of a record that corresponds to a task determined as "closed". Thus, the schedule-opening setting unit 13 can perform public setting and private setting of a schedule automatically.

Subsequently, the schedule-opening setting unit 13 displays the public schedule (step S24). As an example, the schedule-opening setting unit 13 displays a schedule of a task for which "B" is set as the user 22b, "yyyy/mm/dd" is set as the scheduled start time 22c, and "open" is set as the open/closed 22f, on the user interface device 3 of A. Thus, by viewing the public schedule on yyyy/mm/dd of B, A can reserve time to work with B easily. In other words, A can share spare time with B without directly asking B, and costs for schedule arrangement can be reduced.

### [Specific Example of Schedule Opening]

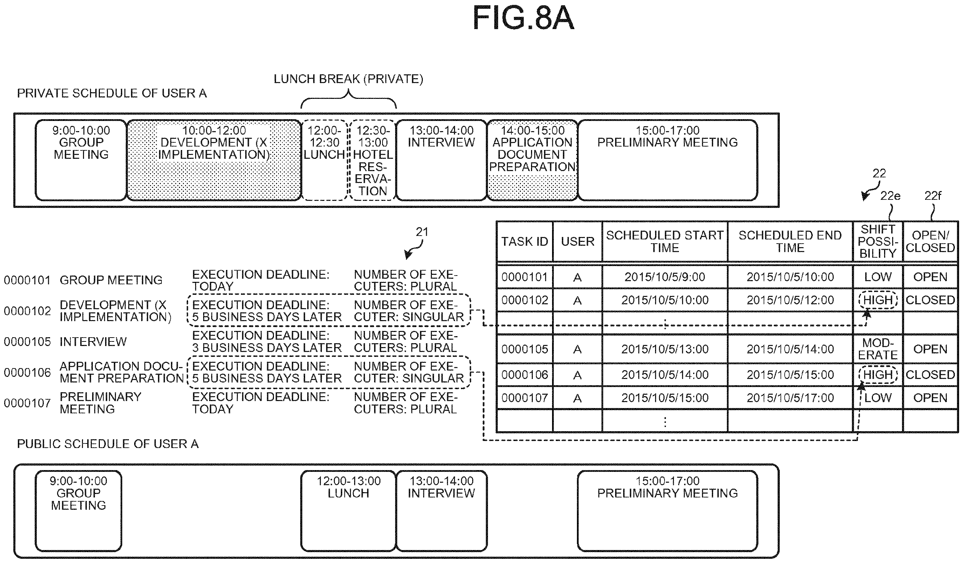

FIG. 8A to FIG. 8C illustrate a specific example of schedule opening according to the embodiment. In FIG. 8A to FIG. 8C, in a personal schedule of user A, "group meeting", "development (X implementation)", "lunch", "hotel reservation", "interview", "application document preparation", and "preliminary meeting" are registered as task names. The task information 21 corresponding to these task names is respectively given. Respective schedules corresponding to these task names are registered in the schedule DB 22.

When receiving a shift-possibility estimation request of a schedule under such a condition, the schedule-shift-possibility estimating unit 11 estimates a shift possibility of respective schedules of plural tasks based on the execution dead line and the number of executers included in the task information 21. The schedule-shift-possibility estimating unit 11 stores a shift possibility in the shift possibility 22e of the schedule DB 22, for a task for which the shift possibility of a schedule has been estimated. In this example, for tasks "group meeting" and "preliminary meeting", the execution deadline of which is "today" and, the number of executers of which is "plural", "low" is set to the shift possibility 22e because the execution deadline is close, and the number of executers is plural. For the task "interview", the execution deadline of which is "three business days later", and the number of executers of which is "plural", "moderate" is set to the shift possibility 22e because the execution deadline is far, and the number of executers is plural. For the tasks "development (X implementation)" and "application document preparation", the execution deadline of which is "five business days later" and, the number of executers of which is "singular", "high" is set to the shift possibility 22e because the execution deadline is far, and the number of executers is singular.

Suppose that a display request for a schedule of 2015/10/5 of A is made from the user interface device 3 of B. The schedule-opening determining unit 12 determines whether the shift possibility of the schedule is equal to or lower than a threshold, for a task in the schedule of 2015/10/5 of A. As an example, it is assumed that the threshold is "moderate". The schedule-opening determining unit 12 determines that the shift possibility of the tasks of "group meeting", "interview", and "preliminary meeting" is "moderate" or lower. That is, the schedule-opening determining unit 12 determines to open the schedule of the tasks of "group meeting", "interview", and "preliminary meeting". The schedule-opening determining unit 12 determines that the shift possibility of the tasks "development (X implementation)" and "application document preparation" is higher than "moderate". That is, the schedule-opening determining unit 12 determines not to open the schedule of the tasks "development (X implementation)" and "application document preparation".

Subsequently, the schedule-opening setting unit 13 registers information indicating that a schedule is opened for a task, the schedule of which has been determined to be opened based on the shift possibility of the schedule in the schedule DB 22. The schedule-opening setting unit 13 registers information indicating that a schedule is not opened for a task, the schedule of which has been determined not to be opened based on the shift possibility of the schedule in the schedule DB 22. In this example, the schedule-opening setting unit 13 stores "open" in the open/closed 22f of the schedule DB 22, for the tasks of "group meeting", "interview", and "preliminary meeting". The schedule-opening setting unit 13 stores "closed" in the open/closed 22f of the schedule DB 22, for the tasks of "development (X implementation)" and "application document preparation".

The schedule-opening setting unit 13 displays the public schedule. In this example, the schedule-opening setting unit 13 displays the schedules of the tasks "group meeting", "interview", and "preliminary meeting" for which "open" has been set as the open/closed 22f, out of the tasks of 2015/10/5 of A, on the user interface device 3 of B. On the other hand, the schedule-opening setting unit 13 avoids displaying the schedules of the tasks "development (X implementation)" and "application document preparation" for which "closed" has been set as the open/closed 22f, out of the tasks of 2015/10/5 of A.

Thus, by viewing the public schedule of 2015/10/5 of A, B can reserve time 10:00 to 12:00, 14:00 to 15:00 possible to work with A easily. In other words, B can share the spare time 10:00 to 12:00, 14:00 to 15:00 without directly asking A, and costs for schedule arrangement can be reduced.

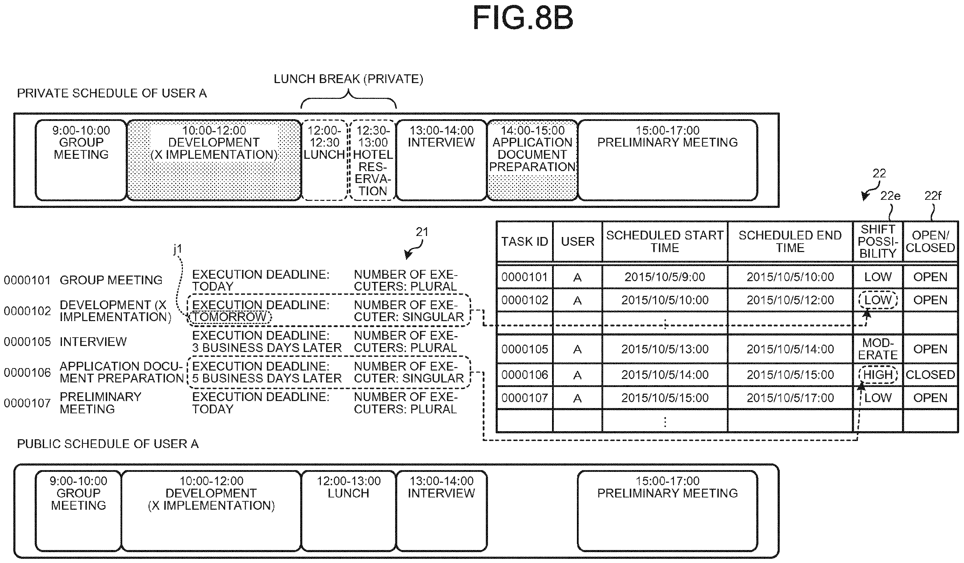

In FIG. 8B, it is assumed that "development (X implementation)" and "tomorrow" (j1) are registered as the task name and the execution deadline, respectively. The task information 21 of the other task names is assumed to be the same as that in FIG. 8A.

When receiving a shift-possibility estimation request of a schedule under such a condition, the schedule-shift-possibility estimating unit 11 estimates a shift possibility of respective schedules of plural tasks based on the execution deadline and the number of executers included in the task information 21. The schedule-shift-possibility estimating unit 11 stores a shift possibility in the shift possibility 22e of the schedule DB 22, for a task for which the shift possibility of a schedule has been estimated. In this example, for the task of "development (X implementation)", the execution deadline of which is "tomorrow", "low" is set to the shift possibility 22e because the execution deadline is close.

Suppose that a display request for a schedule of 2015/10/5 of A is made from the user interface device 3 of B. The schedule-opening determining unit 12 then determines whether the shift possibility of the schedule is equal to or lower than "moderate", for the task "development (X implementation)" in the schedule of 2015/10/5 of A. In this example, the schedule-opening determining unit 12 determines that the shift possibility of the task "development (X implementation)" is "moderate" or lower. That is, the schedule-opening determining unit 12 determines to open the schedule of the task "development (X implementation)".

Subsequently, the schedule-opening setting unit 13 registers information indicating that a schedule is opened for a task, the schedule of which has been determined to be opened based on the shift possibility of the schedule in the schedule DB 22. In this example, the schedule-opening setting unit 13 stores "open" in the open/closed 22f of the schedule DB 22, for the task "development (X implementation)".

Thus, by viewing the public schedule of 2015/10/5 of A, B can reserve time 14:00 to 15:00 possible to work with A easily. In other words, B can share the spare time from 14:00 to 15:00 without directly asking A, and costs for schedule arrangement can be reduced.

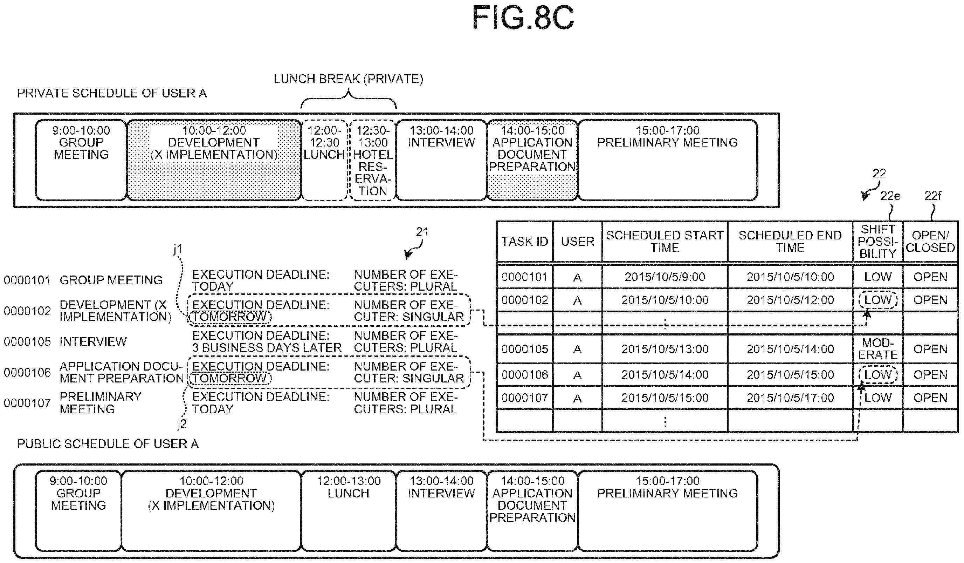

In FIG. 8C, it is assumed that "development (X implementation)" and "tomorrow" (j1) are registered as the task name and the execution deadline, respectively, and "application document preparation" and "tomorrow" (j2) are registered as the task name and the execution deadline, respectively. The task information 21 of the other task names is assumed to be the same as that in FIG. 8A.

When receiving a shift-possibility estimation request of a schedule under such a condition, the schedule-shift-possibility estimating unit 11 estimates a shift possibility of respective schedules of plural tasks based on the execution deadline and the number of executers included in the task information 21. The schedule-shift-possibility estimating unit 11 stores a shift possibility in the shift possibility 22e of the schedule DB 22, for a task for which the shift possibility of a schedule has been estimated. In this example, for the tasks of "development (X implementation)" and "application document preparation", the execution deadline of which is "tomorrow", "low" is set to the shift possibility 22e of each task because the execution deadline is close.

Suppose that a display request for a schedule of 2015/10/5 of A is made from the user interface device 3 of B. The schedule-opening determining unit 12 then determines whether the shift possibility of the schedule is equal to or lower than "moderate", for the tasks "development (X implementation)" and "application document preparation" in the schedule of 2015/10/5 of A. In this example, the schedule-opening determining unit 12 determines that the shift possibility of the tasks "development (X implementation)" and "application document preparation" is "moderate" or lower. That is, the schedule-opening determining unit 12 determines to open the schedule of the tasks "development (X implementation)" and "application document preparation".

Subsequently, the schedule-opening setting unit 13 registers information indicating that a schedule is opened for a task, the schedule of which has been determined to be opened based on the shift possibility of the schedule in the schedule DB 22. In this example, the schedule-opening setting unit 13 stores "open" in the open/closed 22f of the schedule DB 22, for the tasks "development (X implementation)" and "application document preparation".

Thus, by viewing the public schedule of 2015/10/5 of A, B can recognize that time possible to work with A is not available from 9:00 to 17:00, and costs for schedule arrangement can be reduced.

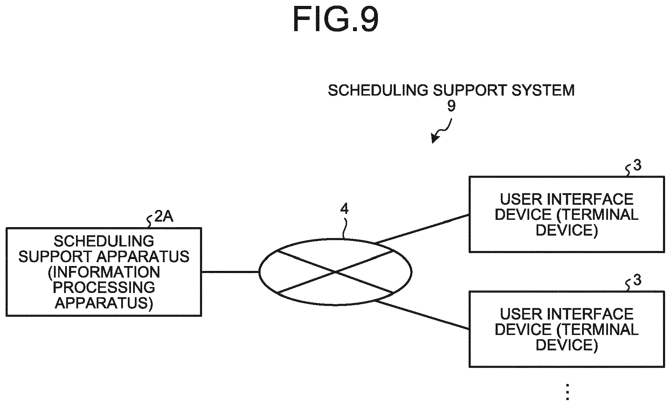

The scheduling support system 9 according to the embodiment can have a configuration including functions of the server 1 in the scheduling support apparatus 2. FIG. 9 illustrates another configuration of the system according to the embodiment. As illustrated in FIG. 9, the scheduling support system 9 includes a scheduling support apparatus 2A and the user interface device 3. The scheduling support apparatus 2A is connected to the user interface device 3 through the network 4.

The scheduling support apparatus 2A creates a schedule for plural tasks by performing arbitration of the tasks, using execution order (task flow) of the respective tasks that have been defined in plural pieces of task information, and the task information 21 of the respective tasks. The scheduling support apparatus 2A stores the created schedule for the plural tasks in a schedule DB 22. Subsequently, the scheduling support apparatus 2A estimates a shift possibility of a task from various kinds of parameters that are used for scheduling of the tasks, and opens the schedule of a task, the shift possibility of which is low.

### [Effects of Embodiment]

As described, in the above embodiment, the server 1 estimates, when creating schedules for plural tasks, a shift possibility of respective schedules of the tasks based on the task information 21 that defines the respective tasks. The server 1 registers information indicating a task, the estimated shift possibility of which is lower than a reference value is opened to be displayed among the tasks, in the schedule DB 22. According to this configuration, the server 1 can perform public setting of schedules of plural tasks automatically. Moreover, the server can display a public schedule by suing the public setting of schedules of plural tasks.

Furthermore, in the above embodiment, the server 1 displays a task for which the information indicating that the task is opened to be displayed is set in the schedule DB 22 out of plural tasks. According to this configuration, the server 1 can display a public schedule by using public setting of schedules of plural tasks stored in the schedule DB 22.

Moreover, in the above embodiment, the server 1 estimates a shift possibility of respective schedules of plural tasks based on various kinds of parameters included in the task information 21, for the respective tasks. According to this configuration, the server 1 can estimate a shift possibility of a schedule of a task appropriately, by using various kinds of parameters included in the task information 21 of the task.

Furthermore, in the above embodiment, the server 1 estimates a shift possibility of respective schedules of plural tasks based on various kinds of parameters included in the task information 21 and various parameters in a task flow that defines execution order of the tasks, for the respective tasks. According to this configuration, the server 1 can estimate a shift possibility of a schedule of a task appropriately, by using various kinds of parameters included in the task information 21 of the task and various kinds of parameters in an entire task flow.

### [Others]

In the above embodiment, it has been explained that the schedule-shift-possibility estimating unit 11 estimates a shift possibility of respective schedules of plural tasks based on various kinds of parameters included in the task information 21, for the respective tasks. It has been explained that various kinds of parameters are an execution deadline and the number of executers, as an example. However, the schedule-shift-possibility estimating unit 11 is not limited thereto, but can estimate a shift possibility of respective schedules of plural tasks based on various kinds of parameters of an entire task flow of the plural tasks. In this case, various kinds of parameters are an execution deadline and the number of executers of the entire task flow. Moreover, various kinds of parameters are not limited to the execution deadline and the number of executers, but can be any parameter as long as it is a parameter enabling to estimate a shift possibility of a schedule of a task.

Furthermore, in the above embodiment, the schedule-shift-possibility estimating unit 11 estimates a shift possibility of respective schedules of plural tasks based on the task information 21 that defines the respective tasks, and stores the shift possibility in the shift possibility 22e of the schedule DB 22. However, the shift possibility 22e stored in the schedule DB 22 can be arbitrarily changed by a user. The schedule-opening determining unit 12 can adjust a threshold to determine whether to open or not to open the schedule of the task in a public schedule, by using the changed shift possibility 22e or the shift possibility 22e that has been set. As an example, when the shift possibility 22e of a specific task is changed from "high" to "moderate", the schedule-opening determining unit 12 can adjust the threshold from "moderate" to "low". Thus, the server 1 can open/not open a task in the public schedule appropriately.

Moreover, in the above embodiment, it has been explained that the schedule-opening setting unit 13 displays, when receiving a schedule display request, a schedule of a task for which "open" has been set to the open/closed 22f of the schedule DB 22 out of tasks corresponding to the request. However, the schedule-opening setting unit 13 is not limited thereto, but can display a schedule of a task for which "closed" is set as spare time, instead of displaying a schedule of a task for which "open" is set. Thus, a source of the schedule display request can share spare time therewith without directing asking a request destination, by viewing the public schedule of the request destination, and costs for schedule arrangement can be reduced.

Furthermore, in the above embodiment, a personal schedule can be displayed such that a schedule that is displayed in the public schedule and a schedule that is not displayed therein are displayed being separated by a solid line and a broken line. Thus, the personal schedule enables a viewer to grasp differences visually.

Moreover, in the above embodiment, when performing rescheduling of a schedule of a task that has once been opened, the scheduling support apparatus 2 can display, when a preview request is received from a user, a personal schedule of the user that has made the preview request on the user interface device 3 of the user. Subsequently, when receiving a finalization response from the user for the rescheduling, the scheduling support apparatus 2 can transmit contents of the task information and the schedule DB for which the rescheduling has been performed to the server 1. Thus, the server 1 can open/not open the task subjected to rescheduling appropriately, even if the task has once been opened.

Furthermore, in the above embodiment, respective components of the illustrated devices are not necessarily physically configured as illustrated. That is, specific forms of distribution and integration of the respective devices are not limited to the ones illustrated, and all or a part thereof can be configured to be distributed or integrated functionally or physically in arbitrary units according to various kinds of loads, usage conditions, and the like. For example, the schedule-opening determining unit 12 and the schedule-opening setting unit 13 can be integrated as a single unit. The storage unit 20 can be connected through a network as an external device of the server 1.

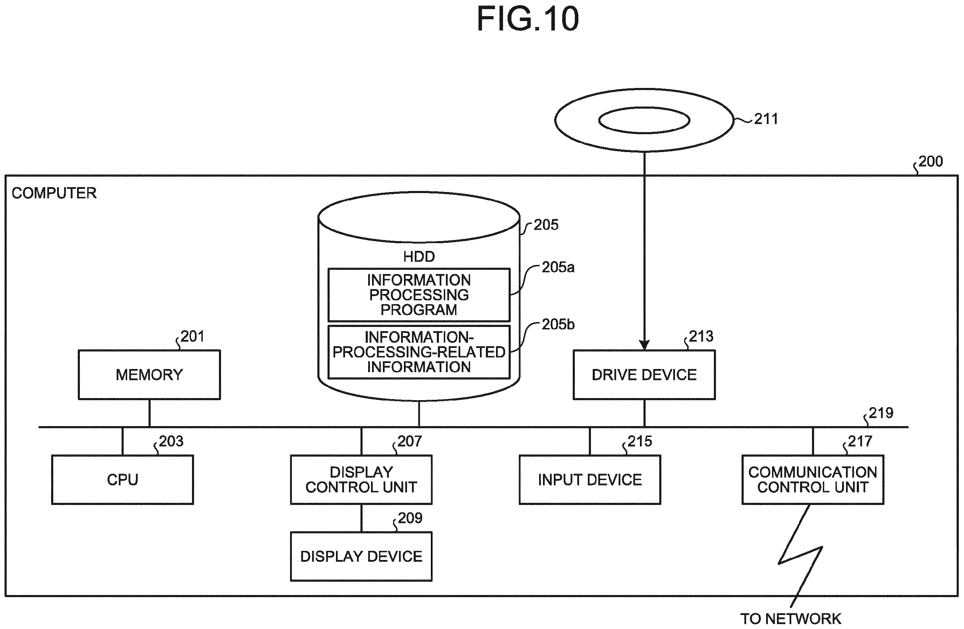

Moreover, the respective processing explained in the above embodiment can be implemented by executing a program that has been prepared in advance by a computer such as a personal computer and a workstation. Therefore, in the following, one example of a computer that executes an information processing program implementing functions similar to those of the server 1 illustrated in FIG. 2 is explained. FIG. 10 illustrates one example of a computer that executes the information processing program.

As illustrated in FIG. 10, a computer 200 includes a CPU 203 that executes various kinds of arithmetic processing, an input device 215 that accepts an input of data from a user, and a display control unit 207 that controls a display device 209. Furthermore, the computer 200 includes a drive device 213 that reads a program and the like from a recording medium, and a communication control unit 217 that communicates data with other computers through a network. Moreover, the computer 200 includes a memory 201 that stores various kinds of information temporarily, and an HDD 205. The memory 201, the CPU 203, the HDD 205, the display control unit 207, the drive device 213, the input device 215, and the communication control unit 217, are connected to each other through a bus 219.

The drive device 213 is, for example, a device for a removable disk 211. The HDD 205 stores an information processing program 205a and information-processing-related information 205b.

The CPU 203 reads the information processing program 205a, and develops it in the memory 201 to execute it as a process. The process corresponds to the respective functional units of the server 1. The information-processing-related information 205b corresponds to the task information 21 and the schedule DB 22. For example, the removable disk 211 stores various information such as the information processing program 205a.

The information processing program 205a is not necessarily stored in the HDD 205 from the beginning. For example, it can be stored in a "portable physical medium", such as a flexible disk (FD), a CD-ROM, a DVD, a magnetooptical disk, or an IC card, that is inserted into the computer 200, and the computer 200 can read the information processing program 205a from these to execute it.

### [Explanation of Reference]

- 1: SERVER
- 10: CONTROL UNIT
- 11: SCHEDULE-SHIFT-POSSIBILITY ESTIMATING UNIT
- 12: SCHEDULE-OPENING DETERMINING UNIT
- 13: SCHEDULE-OPENING SETTING UNIT
- 20: STORAGE UNIT
- 21: TASK INFORMATION
- 22: SCHEDULE DB
- 2: SCHEDULING SUPPORT APPARATUS
- 3: USER INTERFACE DEVICE
- 4: NETWORK
- 9: SCHEDULING SUPPORT SYSTEM

## Claims

1. An information processing apparatus comprising:
an estimating unit configured to estimate, based on task information that defines respective schedules of a plurality of tasks, a shift possibility of the respective schedules of the tasks; and
a setting unit configured to set information indicating to be opened to be public for a task, the shift possibility estimated by the estimating unit of which is lower than a reference value out of the tasks, in a storage unit configured to store the schedules of the tasks.

2. The information processing apparatus according to claim 1, wherein the setting unit configured to further display the task for which the information indicating to be opened to be displayed is set in the storage unit out of the tasks.

3. The information processing apparatus according to claim 1, wherein the estimating unit configured to estimate the shift possibility of the respective schedules of the tasks based on various kinds of parameters included in the task information, for the respective tasks.

4. The information processing apparatus according to claim 3, wherein the estimating unit configured to further estimate the shift possibility of the respective schedules of the tasks based on various kinds of parameters included in the task information and various kinds of parameters in a task flow that defines execution order of the tasks, for the respective tasks.

5. The information processing apparatus according to claim 3 or 4, wherein the various kinds of parameters include an execution deadline for execution of a task or number of executers that execute the task or a combination thereof.

6. An information processing program that causes a computer to execute:
estimating, based on task information that defines respective schedules of a plurality of tasks, a shift possibility of the respective schedules of the tasks; and
setting information indicating to be opened to be public for a task, the shift possibility estimated by the estimating unit of which is lower than a reference value out of the tasks, in a storage unit configured to store the schedules of the tasks.

7. An information processing method wherein
a computer executes processing of:
estimating, based on task information that defines respective schedules of a plurality of tasks, a shift possibility of the respective schedules of the tasks; and
setting information indicating to be opened to be public for a task, the shift possibility estimated by the estimating unit of which is lower than a reference value out of the tasks, in a storage unit configured to store the schedules of the tasks.
